# EUROPÄISCHE PATENTSCHRIFT

(11) **EP 2 162 872 B1**
(45) Veröffentlichungstag und Bekanntmachung des Hinweises auf die Patenterteilung: **07.07.2010**
(21) Anmeldenummer: 08718213.5
(22) Anmeldetag: 26.03.2008
(51) Int. Cl.: G08G 1/16, G01S 13/93

(54) **KOLLISIONSWARNGERÄT MIT LEITPLANKENERKENNUNG**
COLLISION WARNING DEVICE HAVING GUARDRAIL DETECTION
DISPOSITIF ANTICOLLISION DOTÉ D'UN SYSTÈME DE DÉTECTION DE GLISSIÈRES DE SÉCURITÉ

(30) Priorität: 25.05.2007 DE 102007024391
(43) Veröffentlichungstag der Anmeldung: 17.03.2010
(73) Patentinhaber: Robert Bosch GmbH, 70442 Stuttgart (DE)
(72) Erfinder: SCHWINDT, Oliver, 71277 Rutesheim (DE); WACKERL, Oliver, 73230 Kirchheim An Der Teck (DE)
(86) Internationale Anmeldenummer: PCT/EP2008/053537
(87) Internationale Veröffentlichungsnummer: WO 2008/145430

(56) Entgegenhaltungen:
- WO-A-03/094130
- WO-A-2006/126736
- DE-A1-102005 024 716

## Beschreibung

### Stand der Technik

Die Erfindung betrifft ein Kollisionswarngerät für Kraftfahrzeuge, mit einem Ortungssystem zur Ortung von Objekten im Vorfeld des Fahrzeugs und einem Steuergerät zur Auswertung der Daten des Ortungssystems und zur Ausgabe eines Warnsignals bei drohender Kollisionsgefahr, mit einem Erkennungsmodul zur Erkennung des Verlaufs von Leitplanken anhand der Daten des Ortungssystems. Ein solches Gerät ist z.B. aus der WO03/094130 bekannt.

Solche Kollisionswarngeräte sollen den Fahrer bei der Führung des Kraftfahrzeugs unterstützen und zur Verringerung der Unfallgefahr und/oder zur Milderung der Unfallfolgen beitragen und werden auch als PSS-Systeme (Predictive Safety Systeme) bezeichnet. Das Ortungssystem wird zumeist durch einen winkelauflösenden Radarsensor gebildet, mit dem die Abstände, Relativgeschwindigkeiten und Azimutwinkel der georteten Objekte gemessen werden können. Anhand dieser Daten und anhand der dynamischen Daten des Fahrzeugs berechnet das Steuergerät dann eine sogenannte "time to collision", d. h. die Zeit, nach der die Kollision eintreten würde, wenn sich der dynamische Zustand des Fahrzeugs nicht ändert. Wenn diese Zeit unterhalb eines bestimmten Schwellenwertes liegt, wird das Warnsignal ausgegeben, das dann beispielsweise in einen akustischen Warnhinweis für den Fahrer umgesetzt werden kann, um den Fahrer auf die drohende Gefahr hinzuweisen. Einige PSS-Systeme sind darüber hinaus auch in der Lage, anhand des Warnsignals automatisch geeignete Gegenmaßnahmen, beispielsweise eine Notbremsung, auszulösen, um die Kollision abzuwenden oder zumindest deren Folgen zu mildern.

Weiterhin sind sogenannte ACC-Systeme (Adaptive Cruise Control) bekannt, mit denen der Abstand des Fahrzeugs zu einem vom Radarsensor georteten vorausfahrenden Fahrzeug automatisch geregelt werden kann. Im Rahmen dieser Regelung sind nur Fahrzeugbeschleunigungen und -verzögerungen zugelassen, die innerhalb gewisser, für die Fahrzeuginsassen noch als komfortabel empfundener Grenzen liegen. Wenn die Verkehrssituation eine stärkere Fahrzeugverzögerung erfordert, geben auch diese Systeme ein Warnsignal aus, durch das der Fahrer veranlaßt werden soll, selbst die Kontrolle zu übernehmen. Insofern kann auch ein ACC-System als ein Kollisionswarngerät im Sinne der Erfindung betrachtet werden.

Während herkömmliche PSS- und ACC-Systeme nur auf bewegte Objekte reagieren, also insbesondere auf vorausfahrende Fahrzeuge, ist man bestrebt, auch stehende Objekte in die Auswertung einzubeziehen, so daß beispielsweise auch dann ein Kollisionshinweis ausgegeben werden kann, wenn das eigene Fahrzeug auf ein das Ende eines Staus bildendes stehendes Fahrzeug auffährt. Die Auswertung stehender Objekte erfordert jedoch einen wesentlich höheren Datenverarbeitungsaufwand, da die Anzahl der zu berücksichtigen Objekte dann wesentlich größer ist und sich außerdem in vielen Fällen nur schwer entscheiden läßt, ob es sich bei einem georteten Objekt um ein echtes Hindernis oder nur um ein irrelevantes Objekt, etwa ein Verkehrsschild am Straßenrand oder dergleichen handelt.

In WO 2006/128766 A1 wird ein Kollisionswarngerät beschrieben, das in der Lage ist, anhand charakteristischer Muster in den vom Ortungssystem gelieferten Daten bestimmte Objektklassen, unter anderem auch Leitplanken zu erkennen. Die Information über die Leitplanken kann dann dazu herangezogen werden, den voraussichtlichen Fahrkorridor des eigenen Fahrzeugs zu plausibilisieren, so daß sich sicherer entscheiden läßt, ob ein geortetes stehendes Objekt ein echtes Hindernis auf der Fahrbahn darstellt, oder ob sich das Objekt jenseits der Leitplanke am Fahrbahnrand befindet.

Des weiteren sind sogenannte Spurhalteassistenten oder Spurverlassenswarnsysteme bekannt, bei denen mit Hilfe eines Videosystems der Verlauf der Fahrbahnränder erkannt wird und ein Warnhinweise oder ein automatischer Lenkeingriff ausgelöst wird, wenn der Fahrer im Begriff ist, die derzeit befahrene Fahrspur zu verlassen.

### Offenbarung der Erfindung

Aufgabe der Erfindung ist es, ein Kollisionswarngerät der eingangs genannten Art zu schaffen, mit dem sich die Unfallgefahr weiter reduzieren läßt.

Diese Aufgabe wird erfindungsgemäß dadurch gelöst, daß in dem dem Steuergerät eine zusätzliche Warnfunktion implementiert ist, die anhand des dynamischen Zustands des Fahrzeugs und anhand des erkannten Leitplankenverlaufs einen Parameter für die Querdynamik des Fahrzeugs berechnet, der zur Abwendung einer Kollision mit der Leitplanke erforderlich ist, und die ein Warnsignal ausgibt, wenn dieser Parameter größer als ein vorbestimmter Wert ist.

Das erfindungsgemäße Gerät erlaubt es, den Fahrer frühzeitig zu warnen, wenn er, etwa infolge eines Sekundenschlafes, vom Kurs abgekommen ist und im Begriff ist, eine Leitplanke am Rand der Fahrbahn zu streifen. Das Warnsignal kann dabei so frühzeitig ausgegeben werden, daß sich der Aufprall auf die Leitplanke noch durch einen Lenkeingriff abwenden läßt, ohne daß dabei die Querdynamik des Fahrzeugs, beispielsweise die Querbeschleunigung, so groß wird, daß sie von den Fahrzeuginsassen als unkomfortabel empfunden wird oder gar die Fahrstabilität des Fahrzeugs beeinträchtigt. Insbesondere läßt sich auf diese Weise auch vermeiden, daß der Fahrer den bevorstehenden Aufprall auf die Leitplanke zu spät erkennt und dann zu heftig reagiert und aufgrund dieser Überreaktion die Kontrolle über das Fahrzeug verliert.

Anders als die bekannten Spurverlassenswarnsysteme ist das erfindungsgemäße Gerät nicht auf ein Videosystem und eine zugehörige elektronische Bildauswertung angewiesen. Die Erkennung der Leitplanken kann mit einem Radarsensor erfolgen, beispielsweise mit Doppler-Impulsradar oder mit einem FMCW-Radarsensor, wie er in herkömmlichen Kollisionswarngeräten und ACC-Systemen vorhanden ist.

Von der herkömmlichen Kollisionswarnfunktion unterscheidet sich die erfindungsgemäße zusätzliche Warnfunktion vor allem in den folgenden zwei Punkten:

Die herkömmliche Warnfunktion reagiert auf lokalisierte Objekte, die vom Radarsensor geortet werden. Damit ein Radarziel in diesem Sinn als "Objekt" erkannt werden kann, muß das reflektierte Radarsignal eine gewisse Mindestamplitude aufweisen, damit es sich deutlich vom Rauschhintergrund abhebt. Zwar können auch bestimmte Reflexpunkte an Leitplanken, beispielsweise Leitplankenpfosten, dieses Kriterium erfüllen, doch ist es dann mehr oder weniger vom Zufall abhängig, ob ein bestimmter Teil der Leitplanke als potentielles Hindernis erkannt wird oder nicht. Bei dem erfindungsgemäßen Gerät wird dagegen mit Hilfe des Erkennungsmoduls der Verlauf der Leitplanken erkannt, so daß die Warnfunktion auch für Leitplankenabschnitte zur Verfügung steht, deren Radarecho unterhalb der Erkennungsschwelle für Objekte liegt.

Weiterhin wird bei der herkömmlichen Warnfunktion das Kollisionswarnsignal erst dann ausgelöst, wenn die "time to collision" einen relativ kleinen Schwellenwert von beispielsweise 1 2 s unterschreitet. Bei einem größeren Schwellenwert würde die Warnfunktion zu einer beträchtlichen Zunahme der Häufigkeit von Fehlwarnungen bzw. Fehlreaktionen führen, die ihrerseits eine Gefahrenquelle darstellen können oder zumindest von den Fahrzeuginsassen als störend empfunden werden und somit die Akzeptanz des Systems in Frage stellen. Bei der erfindungsgemäßen zusätzlichen Warnfunktion ist dagegen die Auslösung des Warnsignals nicht von der "time to collision" abhängig, sondern von einem für die Querdynamik des Fahrzeugs repräsentativen Parameter, beispielsweise von der Querbeschleunigung, die bei einem korrigierenden Lenkeingriff auftreten würde, mit dem der Fahrer versucht, den (streifenden) Aufprall auf die Leitplanke zu verhindern. Dies ermöglicht für den speziellen Fall einer drohenden Kollision mit der Leitplanke eine wesentlich frühere Ausgabe des Warnsignals, ohne daß die Häufigkeit von Fehlwarnungen zunimmt.

Wenn das bei einem drohenden Aufprall auf die Leitplanke erzeugte Warnsignal für einen Warnhinweis an den Fahrer genutzt wird, so kann dieser Hinweis von den im Rahmen der normalen Kollisionwarnfunktion ausgegebenen Warnhinweisen unterscheidbar sein. Beispielsweise kann bei einem drohenden Streifen der Leitplanke ein haptischer Hinweis (Rütteln des Lenkrads oder dergleichen) ausgegeben werden, während bei einem drohenden Aufprall auf ein Hindernis auf der Fahrbahn ein akustischer Warnhinweis erfolgt.

Vorteilhalfte Ausgestaltungen der Erfindung sind in den Unteransprüchen angegeben.

### Kurze Beschreibung der Zeichnungen

Ein Ausführungsbeispiel der Erfindung ist in den Zeichnungen dargestellt und in der nachfolgenden Beschreibung näher erläutert.

Es zeigen:
- Fig. 1: ein Blockdiagramm eines Kollisionswarngerätes gemäß der Erfindung;
- Fig. 2: ein Frequenz/Amplituden-Diagramm für ein von einem Radarsensor empfangenes Signal;
- Fig. 3: ein Geschwindigkeits/Abstandsdiagramm zur Erläuterung eines Verfahrens zur Auswertung der Signale des Radarsensors;
- Fig. 4: ein Diagramm zur Illustration eines Verfahrens zur Bestimmung des Verlaufs von Leitplanken;
- Fig. 5: eine Skizze einer Verkehrssituation zur Erläuterung der Funktionsweise des Kollisionswarngerätes gemäß der Erfindung;
- Fig. 6: ein Flußdiagramm zur Illustration der Arbeitsweise des Kollisionswarngerätes; und
- Fig. 7: eine weitere Skizze einer Verkehrssituation.

### Ausführungsform der Erfindung

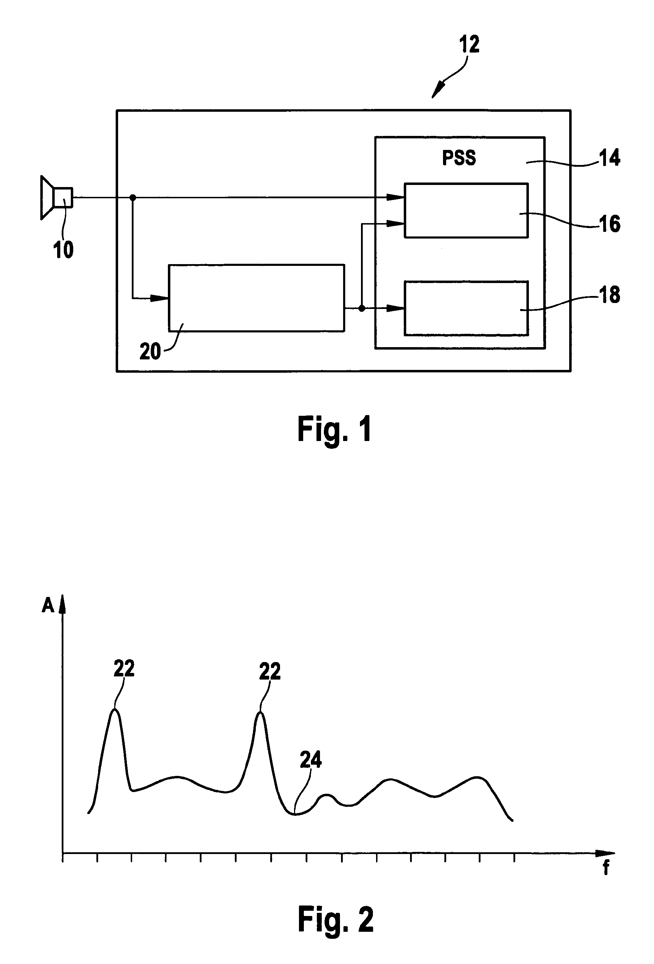

Das in Fig. 1 gezeigte Kollisionswarngerät umfaßt ein Ortungssystem, das hier durch einen Radarsensor 10 gebildet wird, und ein elektronisches Steuergerät 12, beispielsweise ein Datenverarbeitungssystem mit zugehöriger Software, das die Signale des Radarsensors 10 auswertet. Kernstück des Steuergerätes 12 ist ein durch geeignete Hardware und/oder Software gebildetes PSS-Modul, in dem zwei unterschiedliche Warnfunktionen implementiert sind, die hier als Kollisionswarnfunktion 16 und Kurswarnfunktion 18 bezeichnet werden. Die Kollisionswarnfunktion 16 entspricht der herkömmlichen Funktion eines bekannten PSS-Systems. Im Rahmen dieser Funktion wird anhand der Ortungsdaten des Radarsensors 10 und anhand der dynamischen Daten des mit dem Kollisionswarngerät ausgerüsteten Fahrzeugs ein "time to collision" berechnet, und es wird ein Warnsignal ausgegeben, wenn diese "time to collision" einen bestimmten Schwellenwert unterschreitet.

Die Kurswarnfunktion 18 dient speziell dazu, den Fahrer vor einem drohenden (streifenden) Aufprall auf eine Leitplanke zu warnen. Zu diesem Zweck umfaßt das Steuergerät 12 zusätzlich ein Erkennungsmodul 20, das anhand der Daten des Radarsensors 10 den Verlauf von etwa am Fahrbahnrand vorhandenen Leitplanken erkennt.

Ein mögliches Verfahren zur Erkennung des Verlaufs der Leitplanken anhand der vom Radarsensor 10 gelieferten Daten soll unter Bezugnahme auf die Figuren 2 bis 4 erläutert werden. Dabei wird angenommen, daß es sich bei dem Radarsensor 10 um einen winkelauflösenden langreichweitigen Radarsensor (LRR) handelt, und zwar speziell um ein sogenanntes FMCW-Radar (Frequency Modulated Continuos Wave).

Das Funktionsprinzip des FMCW-Radars besteht kurz gefaßt darin, daß ein Radarsignal mit einer rampenförmig modulierten Frequenz gesendet wird und daß das empfangene Radarecho mit dem gesendeten Signal gemischt wird, so daß man als Mischprodukt ein Zwischenfrequenzsignal erhält, dessen Frequenz den Frequenzunterschied zwischen dem gesendeten Signal und dem empfangenen Signal entspricht. Dieses Zwischenfrequenzsignal wird dann in sein Fequenzspektrum zerlegt, wie beispielhaft in Fig. 2 dargestellt ist.

In Fig. 2 ist die Amplitude A des Zwischenfrequenzsignals gegen die Frequenz f aufgetragen. Lokalisierte Objekte wie beispielsweise vorausfahrende Fahrzeuge, Schilder am Fahrbahnrand und dergleichen zeichnen sich in dem Spektrum durch einzelne Peaks 22 ab, die sich deutlich vom Rauschhindergrund 24 abheben und ihren Scheitelwert jeweils bei einer bestimmten Frequenz haben. Aufgrund der rampenförmigen Modulation des gesendeten Signals ist die Frequenz des Peaks von der Laufzeit des betreffenden Radarsignals und damit vom Abstand des zu dem Peak gehörenden Objekts abhängig. Aufgrund des Doppler-Effekts ist die Frequenz des Peaks jedoch zusätzlich auch von der Relativgeschwindigkeit des Objekts abhängig. Anhand eines einzelnen Peaks 22 lassen sich daher der Abstand und die Relativgeschwindigkeit des Objekts noch nicht eindeutig bestimmen.

Zur Beseitigung dieser Mehrdeutigkeit wird das gesendete Signal zumeist mit zwei unterschiedlichen Rampen moduliert, beispielsweise abwechselnd mit einer steigenden und fallenden Rampe. Der auf den Doppler-Effekt zurückgehende Anteil der Frequenz ist auf beiden Rampen identisch, während der abstandsabhängige Anteil auf den beiden Rampen ein entgegengesetztes Vorzeichen hat. Indem man die Frequenz der Peaks, die für dasselbe Objekt auf den beiden Rampen erhalten werden, einmal addiert und einmal subtrahiert, lassen sich dann die abstandsabhängigen und geschwindigkeitsabhängigen Anteile voneinander trennen.

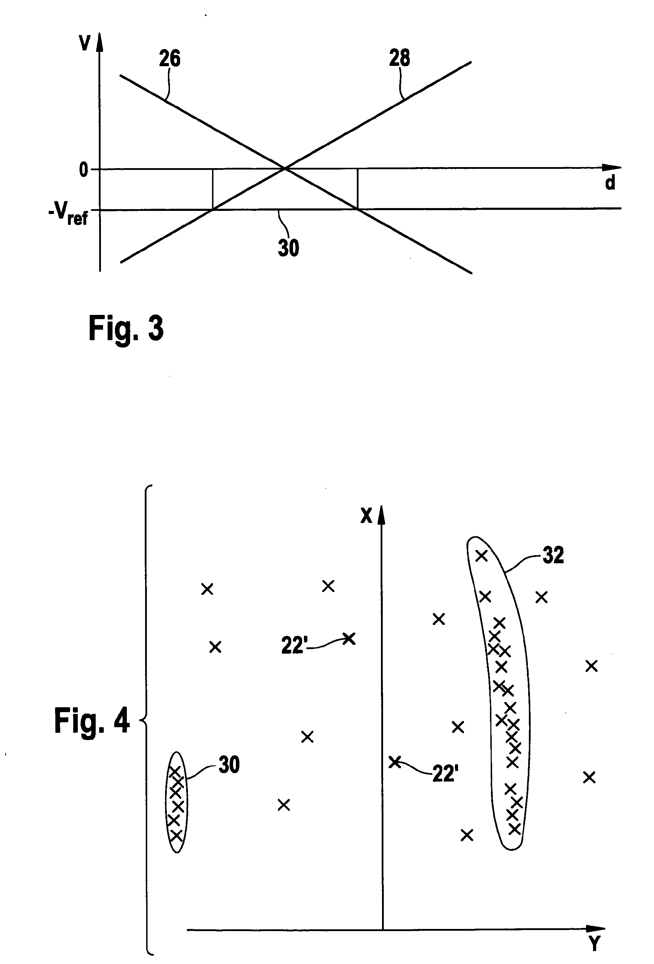

In Fig. 3 ist für eine bestimmte Frequenz eines einzelnen Peaks die mögliche Relativgeschwindigkeit V des zugehörigen Objekts gegen dessen Abstand d aufgetragen. Für eine steigende Rampe liegen die möglichen Paare aus Geschwindigkeit und Abstand auf einer fallenden Geraden 26 (eine Zunahme des Abstands d würde zu einer kleineren Frequenz des empfangenen Radarsignals führen, und dies müßte durch den Doppler-Effekt kompensiert werden, d. h. das Objekt müßte näher kommen oder sich weniger schnell entfernen, also müßte seine Relativgeschwindigkeit V abnehmen). Entsprechend liegen die Paare aus Geschwindigkeit und Abstand für eine fallende Rampe auf einer steigenden Geraden 28.

Die Gerade 30 in Fig. 3 repräsentiert stehende Objekte, d. h. Objekte, deren Relativgeschwindigkeit den Wert -V_{ref} hat, wenn V_{ref} die Eigengeschwindigkeit des mit dem Kollisionswarngerät ausgerüsteten Fahrzeugs ist. Wenn man annimmt, daß es sich bei dem Objekt, das das Radarecho mit der gemessenen Frequenz erzeugt, um ein stehendes Objekt handelt, läßt sich folglich jeder einzelnen Frequenz (nicht nur den peaks 22) auf jeder Modulationsrampe eindeutig ein zugehöriger Abstandswert zuordnen.

Das Winkelauflösungsvermögen des Radarsensors 10 wird dadurch erreicht, daß dieser Sensor mehrere seitlich gegeneinander versetzte Sende- und Empfangselemente aufweist, deren Zwischenfrequenzsignale unabhängig voneinander ausgewertet werden. Für jedes einzelne Element erhält man somit auf jeder Rampe ein Spektrum der in Fig. 2 gezeigten Art. Für eine gegebene Frequenz haben die Amplituden in diesen verschiedenen Spektren unterschiedliche Werte, und die Amplitudenverteilung ist vom Azimutwinkel des Objekts abhängig. Folglich läßt sich aus der Amplitudenverteilung der Azimutwinkel bestimmen, unter dem das betreffende Signal empfangen wurde. Dies gilt nicht nur für die Objekte, die sich durch die Peaks 22 abzeichnen, sondern im Prinzip für jede Frequenz in den Spektren.

In Fig. 2 ist lediglich der Absolutbetrag der Amplitude A dargestellt. In der Praxis handelt es sich jedoch um komplexe Amplituden, die sich in Abhängigkeit vom Azimutwinkel nicht nur in ihrem Betrag, sondern auch in ihrer Phase unterscheiden. Durch Auswertung der Amplituden- und Phasenbeziehungen läßt sich mit verhältnismäßig wenigen Sende- und Empfangselementen ein relativ hohes Winkelauflösungsvermögen erreichen.

Die Erkennung des Verlaufs der Leitplanken in dem Erkennungsmodul 20 basiert auf einer statistischen Analyse der Orte (Abstände und Azimutwinkel), die sich den empfangenen Radarechos unter der vereinfachenden Annahme zuordnen lassen, daß alle Echos von stehenden Objekten stammen. Diese Annahme erlaubt es, auf jeder einzelnen Frequenzmodulationsrampe jeder Frequenz eindeutig einen Abstand d (wie in Fig. 3 gezeigt ist) und einen Azimutwinkel zuzuordnen. Diese Größenpaare können dann in kartesische Koordinaten umgerechnet und in eine digitale Karte eingetragen werden, wie schematisch in Fig. 4 dargestellt ist.

In dem in Fig. 4 gezeigten Koordinatensystem entspricht die X-Achse der Längsrichtung des Fahrzeugs und die Y-Achse der Querrichtung. Jeder durch ein "x" markierte Punkt repräsentiert den Ort, der für eine bestimmte Frequenz ermittelt wurde. Da die Bestimmung der Abstände und Azmimutwinkel nicht nur für die Peaks 22 in Fig. 2 vorgenommen wurde, sondern für eine Vielzahl unterschiedlicher Frequenzen, erhält man in Fig. 4 eine relativ große Anzahl von Punkten, die eine statistische Analyse erlauben.

Die Annahme, daß all diese Punkte stehende Radarziele repräsentieren, trifft natürlich in Wahrheit nicht zu. Für bewegte Objekte, beispielsweise zwei vorausfahrende Fahrzeuge, die die beiden Peaks 22 in Fig. 2 verursacht haben, ist diese Annahme unzulässig, und die beiden entsprechenden, in Fig. 4 fett eingezeichneten Punkte 22' geben folglich nicht die wahren Orte der betreffenden Objekte an. Insbesondere werden die Abstände d und damit die X-Koordinaten dieser Objekte fehlerhaft sein. Alle übrigen Punkte in Fig. 4 stammen jedoch von ortsfesten Reflexionspunkten und geben somit die wahre Lage dieser Reflexionspunkte an. Da der Anteil der bewegten Objekte unter der relativ großen Gesamtzahl der Meßpunkte in Fig. 4 vernachlässigbar klein ist, spielt der Fehler bei den bewegten Objekten für die statistische Auswertung keine Rolle.

Der Vorteil dieses Verfahrens besteht darin, daß man Meßpunkte auch für verhältnismäßig "flache" Zonen in dem Spektrum gemäß Fig. 2 erhalten kann, wo keine ausgeprägten Peaks vorhanden sind und man folglich eine genaue Bestimmung des Abstands und der Relativgeschwindigkeit nicht vornehmen könnte, weil es dazu erforderlich wäre, die auf verschiedenen Rampen erhaltenen Peaks zu identifizieren und einander zuzuordnen. Auf diese Weise können auch verhältnismäßig schwache und diffuse Radarechos erfaßt werden, wie sie insbesondere von Leitplanken verursacht werden. Diese Leitplanken zeichnen sich dann in Fig. 4 als Zonen 30, 32 ab, in denen die Meßpunkte (x) nicht statistisch streuen, sondern eine signifikante Häufung aufweisen. Indem man die Zonen 30, 32 in der digitalen Karte gemäß Fig. 4 identifiziert, läßt sich somit der Verlauf der Leitplanken ermitteln, und zwar mit vergleichsweise geringem Datenverarbeitungsaufwand und mit hoher Wiederholrate, nämlich innerhalb jeder Rampe des Meßzyklus des Radarsensors.

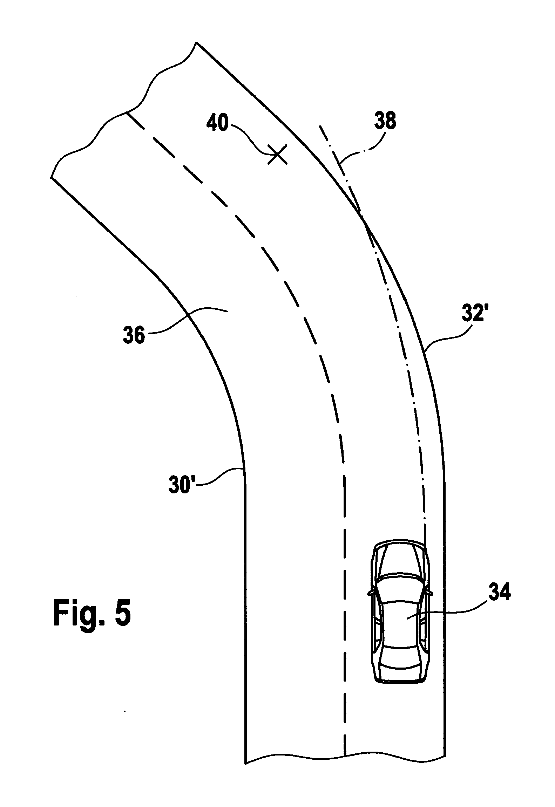

In Fig. 5 ist nun an einem Beispiel illustriert, wie der vom Erkennungsmodul 20 erkannte Verlauf der Leitplanken für die Kurswarnfunktion 18 genutzt wird.

In Fig. 5 fährt das mit dem Kollisionswarngerät gemäß Fig. 1 ausgerüstete Fahrzeug 34 auf einer Straße 36, die links und rechts durch Leitplanken 30' und 32' begrenzt wird. Das Fahrzeug 34 befindet sich unmittelbar vor der Einfahrt in eine Kurve und fährt mit zu hoher Geschwindigkeit in diese Kurve ein, so daß die Gefahr besteht, daß es die Leitplanke 32' streifen wird. Der Verlauf der Leitplanken 30', 32' wird auf die oben beschriebene Weise vom Erkennungsmodul 20 erkannt. Die Kurswarnfunktion 18 wird in dem Steuergerät 12 durch Software implementiert, die prüft, ob die Gefahr einer Kollision mit einer dieser Leitplanken besteht.

Dabei wird von der Prämisse ausgegangen, daß die Querdynamik des Fahrzeugs 34, die sich beispielsweise als Querbeschleunigung ausdrücken läßt, so begrenzt sein muß, daß sie von den Fahrzeuginsassen nicht als unkomfortabel empfunden wird und daß jedenfalls die Fahrstabilität des Fahrzeugs 34 gewährleistet ist. Anhand der mit Hilfe eines Geschwindigkeitssensors des Fahrzeugs 34 gemessenen Eigengeschwindigkeit V_{ref} wird dann der kleinste Krümmungsradius eines Fahrkurses 38 berechnet, für den diese Bedingung noch erfüllt ist, d. h., für den die beim Verfolgen diesen Kurses auftretende Querbeschleunigung unterhalb des vorgegebenen Grenzwertes bleibt. Als Fahrkurs 38 wird dann ein Kurs in der Form eines Kreisbogens angenommen, dessen Krümmungsmittelpunkt auf gleicher Höhe mit der Vorderfront des Fahrzeugs 34 liegt (auf der Y-Achse). Der Radius dieses Fahrkurses 38 entspricht dem berechneten Krümmungsradius plus die halbe Fahrzeugbreite, so daß im Fall einer Linkskurve, wie in Fig. 5, der Fahrkurs 38 die Trajektorie der rechten vorderen Fahrzeugecke beschreibt.

Der Fahrkurs 38 wird dann mit dem Verlauf der Leitplanke 32' verglichen, und es wird geprüft, ob der Fahrkurs 38 die Leitplanke 32' schneidet. Wenn dies (wie in Fig. 5) der Fall ist, wird ein Warnsignal ausgegeben.

Analog läßt sich diese Prüfung auch für die linke Leitplanke 30' durchführen.

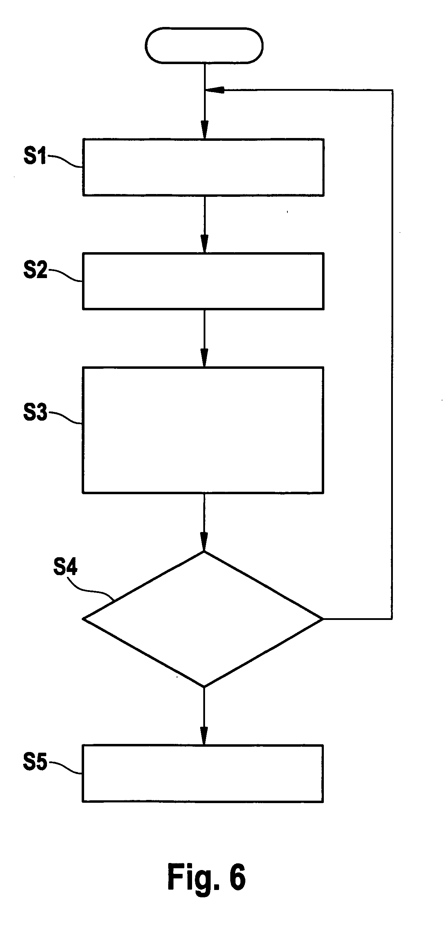

In Fig. 6 sind die wesentlichen Schritte des Verfahrens noch einmal in einem Flußdiagramm dargestellt. Die in diesem Flußdiagramm gezeigte Prozedur wird periodisch von dem Rechner des Steuergerätes 12 ausgeführt. In Schritt S1 wird (im Erkennungsmodul 20) der Verlauf der Leitplanken bestimmt. In Schritt S2 wird die Eigengeschwindigkeit V_{ref} des Fahrzeugs 34 gelesen. In Schritt S3 wird der Kurs 38 berechnet, d. h. der Kurs, bei dem die von der Eigengeschwindigkeit abhängige Querbeschleunigung Q nicht größer ist als ein zugelassener Grenzwert Qₘₐₓ. In Schritt S4 wird dann geprüft, ob der so berechnete Kurs 38 die Leitplanke schneidet. Wenn dies der Fall ist, wird in Schritt S5 ein Warnsignal ausgegeben, andernfalls erfolgt ein Rücksprung zum Schritt S1.

Sofern, wie in Fig. 5, von dem Erkennungsmodul 20 eine rechte und eine linke Leitplanke erkannt werden, werden in Schritt S3 zwei Kurse berechnet, einer mit Rechtskrümmung und einer mit Linkskrümmung, und diese Kurse werden in Schritt S4 mit den jeweiligen Leitplanken verglichen. Somit steht die Kurswarnfunktion 18 nicht nur vor oder in Kurven, sondern auch auf geraden Streckenabschnitten zur Verfügung, so daß der Fahrer auch dann gewarnt werden kann, wenn er infolge einer Unachtsamkeit oder aufgrund eines Sekundenschlafes von der Fahrbahn abkommt. Es versteht sich, daß diese Funktion besonders für schwere Fahrzeuge, beispielsweise LKW, von Nutzen ist, bei denen die Gefahr besonders hoch ist, daß die Leitplanke durchbrochen wird und das Fahrzeug auf die Gegenfahrbahn gerät.

Abweichend von dem hier beschriebenen Beispiel läßt sich die Kurswarnfunktion 18 auf andere Weise realisieren. Beispielsweise kann anhand des Verlaufs der Leitplanken der Punkt bestimmt werden, an dem die Geradeaus-Richtung des Fahrzeugs 34 die Leitplanke schneidet, und es können dann der Abstand dieses Punktes sowie der Winkel bestimmt werden, den die Leitplanke an diesem Punkt der Geradeaus-Richtung bildet. Aus diesen Größen und der Eigengeschwindigkeit V_{ref} läßt sich dann ein Parameter berechnen, der die für ein Ausweichmanöver erforderliche Querdynamik angibt, und das Warnsignal wird nur ausgelöst, wenn dieser Parameter einen entsprechenden Schwellenwert überschreitet.

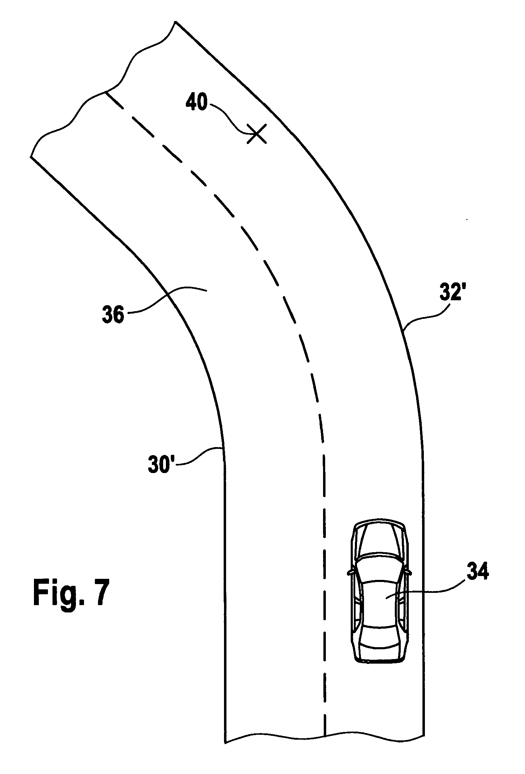

Der mit Hilfe des Erkennungsmoduls 20 erkannte Verlauf der Leitplanken läßt sich zusätzlich auch in der Kollisionswarnfunktion 16 dazu nutzen, den Kurs des eigenen Fahrzeugs zu plausibilisieren und zu entscheiden, ob ein geortetes (stehendes) Objekt sich auf der Fahrbahn befindet und somit ein echtes Hindernis darstellt, oder sich jenseits der Leitplanke und somit außerhalb der Fahrbahn befindet. Als Beispiel ist in Fig. 7 ein stehendes Objekt 40 eingezeichnet, das vom Radarsensor 10 geortet wird und von dem zu entscheiden ist, ob es ein echtes Hindernis auf der Fahrbahn darstellt oder nicht. Dazu wird dann im Rahmen der Kollisionswarnfunktion 16 geprüft, auf welcher Seite der Leitplanke 32' sich das Objekt 40 befindet. Wenn es sich, wie in Fig. 7, auf der der Fahrbahn zugewandten Seite der Leitplanke befindet, ist es als ein echtes Hindernis zu qualifizieren, und wenn dann ein geeigneter Schwellenwert für die "time to collision" unterschritten wird, so wird ein Warnsignal ausgegeben. Der Schwellenwert kann dabei relativ groß gewählt werden, so daß die Warnung schon zu einem entsprechend frühen Zeitpunkt erfolgt.

## Patentansprüche

1. Kollisionswarngerät für Kraftfahrzeuge, bei dem einem Steuergerät (12) Daten eines Ortungssystems (10) zugeführt werden und die zugeführten Daten des Ortungssystems (10) im Steuergerät (12) ausgewertet werden und bei drohender Kollisionsgefahr durch das Steuergerät (12) ein Warnsignal ausgegeben wird, mit einem Erkennungsmodul (20) zur Erkennung des Verlaufs von Leitplanken (30', 32') anhand der Daten des Ortungssystems, **dadurch gekennzeichnet, daß** in dem Steuergerät (12) eine zusätzliche Warnfunktion (18) implementiert ist, die anhand des dynamischen Zustands des Fahrzeugs (34) und anhand des erkannten Leitplankenverlaufs einen Parameter (Q) für die Querdynamik des Fahrzeugs berechnet, der zur Abwendung einer Kollision mit der Leitplanke (30', 32') erforderlich ist, und die ein Warnsignal ausgibt, wenn dieser Parameter größer als ein vorbestimmter Wert (Qₘₐₓ) ist.

2. Kollisionswarngerät nach Anspruch 1, **dadurch gekennzeichnet**, mit einem Ortungssystem (10) zur Ortung von Objekten (40) im Vorfeld des Fahrzeugs (34).

3. Kollisionswarngerät nach Anspruch 1 oder 2, **dadurch gekennzeichnet, daß** der Parameter (Q) eine kleinstmögliche Querbeschleunigung des Fahrzeugs (34) ist, die einem Kurs des Fahrzeugs entspricht, auf dem das Fahrzeug die Leitplanke passieren würde, ohne mit dieser zu kollidieren.

4. Kollisionswarngerät nach einem der vorstehenden Ansprüche, **dadurch gekennzeichnet, daß** das Steuergerät (12) dazu ausgebildet ist, im Rahmen der zusätzlichen Warnfunktion (18) einen Kurs (38) für das Fahrzeug (34) zu berechnen, bei dem bei der gegebenen Eigengeschwindigkeit (V_{ref}) des Fahrzeugs die Querbeschleunigung gleich dem vorbestimmten Wert (Qₘₐₓ) wäre, und zu prüfen, ob dieser Kurs (38) die Leitplanke (32') schneidet.

5. Kollisionswarngerät nach einem der vorstehenden Ansprüche, **dadurch gekennzeichnet, daß** das Ortungssystem durch einen Radarsensor (10) gebildet wird.

## Claims

1. Collision warning device for motor vehicles, in which data from a locating system (10) are fed to a control device (12), and the fed-in data from the locating system (10) are evaluated in the control device (12), and when there is a risk of a collision a warning signal is output by the control device (12), having a detection module (20) for detecting the profile of crash barriers (30', 32') on the basis of the data from the locating system, **characterized in that** an additional warning function (18) is implemented in the control device (12), which additional warning function (18) calculates, on the basis of the dynamic state of the vehicle (34) and on the basis of the detected crash barrier profile, a parameter (Q) for the lateral dynamics of the vehicle, which parameter (Q) is necessary to avert a collision with the crash barrier (30', 32'), and which additional warning function outputs a warning signal if this parameter is greater than a predetermined value (Qₘₐₓ) .

2. Collision warning device according to Claim 1, **characterized by** a locating system (10) for locating objects (40) in the area in front of the vehicle (34).

3. Collision warning device according to Claim 1 or 2, **characterized in that** the parameter (Q) is a minimum lateral acceleration of the vehicle (34) which corresponds to a course of the vehicle on which the vehicle would pass by the crash barrier without colliding with it.

4. Collision warning device according to one of the preceding claims, **characterized in that** the control device (12) is designed to calculate, within the scope of the additional warning function (18), a course (38) for the vehicle (34) in which, at the given true speed (V_{ref}) of the vehicle, the lateral acceleration would be equal to the predetermined value (Qₘₐₓ), and to check whether this course (38) intersects the crash barrier (32').

5. Collision warning device according to one of the preceding claims, **characterized in that** the locating system is formed by a radar sensor (10).

## Revendications

1. Appareil d'avertissement d'un risque de collision pour véhicules automobiles, dans lequel
des données d'un système de localisation (10) sont amenées à un appareil de commande (12),
les données du système de localisation (10) apportées à l'appareil de commande (12) sont évaluées et au cas où un risque de collision menace, l'appareil de commande (12) émet un signal d'avertissement,
et présentant un module de reconnaissance (20) qui reconnaît l'évolution de rails de guidage (30', 32') à l'aide des données du système de localisation, **caractérisé en ce que**
une fonction supplémentaire d'avertissement (18) qui calcule à l'aide de l'état dynamique du véhicule (34) et à l'aide de l'évolution détectée des rails de guidage un paramètre (Q) de la dynamique transversale du véhicule qui est nécessaire pour éviter une collision avec les rails de guidage (30', 32') est mise en oeuvre dans l'appareil de commande (12) et délivre un signal d'avertissement lorsque ce paramètre est supérieur à une valeur prédéterminée (Qₘₐₓ).

2. Appareil d'avertissement d'un risque de collision selon la revendication 1, **caractérisé par** un système de localisation (10) qui localise des objets (40) situés à l'avant du véhicule (34).

3. Appareil d'avertissement d'un risque de collision selon les revendications 1 ou 2, **caractérisé en ce que** le paramètre (Q) correspond à la plus petite accélération transversale possible du véhicule (34) qui correspond à une trajectoire du véhicule sur laquelle le véhicule aurait longé les rails de guidage sans entrer en collision avec ce dernier.

4. Appareil d'avertissement d'un risque de collision selon l'une des revendications précédentes, **caractérisé en ce que** l'appareil de commande (12) est configuré pour calculer dans le cadre de la fonction supplémentaire d'avertissement (18) une trajectoire (38) du véhicule (34) pour laquelle à la vitesse propre donnée (V_{ref}) du véhicule, l'accélération transversale serait identique à la valeur (Qₘₐₓ) prédéterminée et pour vérifier si cette trajectoire (38) intersecte le rail de guidage (32').

5. Appareil d'avertissement d'un risque de collision en ce que le système de localisation est formé par un détecteur radar (10).
